# EUROPEAN PATENT APPLICATION

(11) **EP 4 411 220 A1**
(43) Date of publication of application: **07.08.2024**
(21) Application number: 22876417.1
(22) Date of filing: 29.09.2022
(51) Int. Cl.: F23G 5/00, F23G 5/44

(54) **MELTING FURNACE**

(30) Priority: 30.09.2021 JP 2021161339
(71) Applicant: KUBOTA CORPORATION, Osaka-shi, Osaka 556-8601 (JP)
(72) Inventor: INOUE, Shigenori, Amagasaki-shi, Hyogo 661-8567 (JP); HOSHO, Fumiki, Amagasaki-shi, Hyogo 661-8567 (JP)
(74) Representative: Betten & Resch
(86) International application number: PCT/JP2022/036357
(87) International publication number: WO 2023/054551

(57) **Abstract**

Provided is a melting furnace that enables efficient recovery of reusable useful metals from a treatment target containing metals. The melting furnace includes: a furnace chamber that performs melt treatment of a treatment target containing useful metals; a slag port that discharges molten slag generated by the melt treatment; and a furnace floor that guides the molten slag to the slag port, wherein an accumulation mechanism that accumulates molten metal contained in the molten slag is provided on the furnace floor, the accumulation mechanism being configured with a recess formed in front of the slag port on the flat furnace floor and configured to precipitate the molten metal in the recess.

## Description

### Technical Field

The present invention relates to a melting furnace that enables efficient recovery of valuable metals contained in a treatment target.

### Background Art

Miscellaneous waste, such as organic sludge such as sewage sludge, livestock excreta, or methane fermentation residues from food waste; a combustible material such as plastic, paper, SRF (Solid Recovered Fuel), or recycling residues containing plastic and metal; and an incombustible material such as incinerated ash, contaminated soil, waste glass, waste pottery, or asbestos, is melt-treated as a treatment target in a melting furnace.

For example, the miscellaneous waste is melt-treated by a surface melting furnace including a furnace chamber in which a slag port is formed, and a treatment-target supply mechanism for supplying the treatment target toward the furnace chamber, the surface melting furnace configured to melt the treatment target supplied to the furnace chamber by the treatment-target supply mechanism from a surface thereof, and cause it to flow down to the slag port.

In such a melting furnace, the inside of the furnace is adjusted to a reducing atmosphere in order to volatilize heavy metals contained in the treatment target to remove them from slag.

In addition, Patent Literature 1 proposes a surface melting furnace that suppresses the volatilization of phosphorus contained in a treatment target during a melt-treatment. The surface melting furnace is configured to include: a furnace chamber in which a burner and an air supply mechanism are disposed and a slag port is formed; and a treatment-target supply mechanism for supplying the treatment target to the furnace chamber from a treatment-target container provided communicating with the furnace chamber. The treatment target contains phosphorus and a combustible material. The surface melting furnace includes an edge portion air-supply mechanism for supplying air toward a surface of the treatment target in the furnace chamber, the surface being adjacent to a portion in which the treatment-target container communicates with the furnace chamber.

According to the surface melting furnace, the air supplied from the edge portion air-supply mechanism toward the surface of the treatment target causes a fixed carbon content remaining on the portion adjacent to the surface of the treatment target due to the thermal decomposition of the combustible material to combust. The remainder of oxygen further suppresses reduction reactions of phosphorus compounds or phosphorus oxides, and thus suppresses the volatilization of phosphorus.

Patent Literature 2 proposes a method for melt-treating a phosphorus-containing material, including suppressing the volatilization of a phosphorus component contained in the phosphorus-containing material to exhaust gas, and capturing the phosphorus component in slag during the melt-treatment of the phosphorus-containing material such as sewage sludge. The method for melt-treating includes the following steps: a pretreatment step for adjusting a moisture content for the phosphorus-containing material containing 0.04 wt% or more phosphorus in dry substance equivalent; a melting step for supplying the phosphorus-containing material whose moisture content adjusted in the pretreatment step into a melting furnace to melt; and a cooling step for cooling and solidifying the slag produced by melting in the melting step.

The method for melt-treating further performs an iron compound adding step for adding divalent or trivalent iron compounds to the phosphorus-containing material in or before or after the pretreatment step, thereby preventing the volatilization of the phosphorus component contained in the phosphorus-containing material in the melting step, and also capturing the phosphorus component in the slag while suppressing the migration of the phosphorus component into metal phosphorus compounds, for example, iron phosphide.

When such a mixture of the divalent or trivalent iron compounds and the phosphorus-containing material are supplied into the melting furnace, the supplied ferrous oxide (FeO) or ferrous oxide (FeO) produced from the divalent or trivalent iron compounds in the melting process causes a melting point lowering effect. Therefore, for example, at a melting temperature of about 1300°C, a melting flow rate of 60% or more can be secured over a wider range than the preferred basicity of 0.4-0.8 of the phosphorus-containing material to iron, and the volatilization of phosphorus component in the material to be molten is suppressed so that phosphorus is captured in the slag in the form of non-metallic phosphorus compounds.

### Citation List

### Patent Literature

Patent Literature 1: Japanese Unexamined Patent Application Publication No. 2015-190701
Patent Literature 2: Japanese Unexamined Patent Application Publication No. 2015-033691

### Summary of Invention

### Technical Problem

Thus, a method for operating a melting furnace has been known, the method including adjusting a furnace atmosphere to an oxidizing atmosphere to suppress volatilization of useful metals contained in a treatment target, or adding a melting auxiliary agent to suppress alloying of metals such as useful metals contained in the treatment target to capture them in slag. In the present description, reusable single-element metals or alloys among the metals contained in the treatment target, which are recovered from the slag, are referred to as useful metals, and the useful metals include iron, nickel, copper, and the like, as well as noble metals such as silver, gold, platinum, and alloys thereof.

To recover the useful metals contained in the treatment target, slag obtained by melt treatment can be subjected to pulverization and separation processing by specific gravity separation, magnetic separation or the like, thereby recovering the useful metals from the slag.

However, since a particle size of metal contained in slag is very small and a recovery rate of the metal by specific gravity separation or magnetic separation is low, further improvement has been desired with the intention of improving the recovery rate of the metal.

An object of the present invention is to provide a melting furnace that enables efficient recovery of reusable useful metals from a treatment target containing metals.

### Solution to Problem

To achieve the above object, a first feature configuration of a melting furnace according to the present invention is a melting furnace including: a furnace chamber that performs melt treatment of a treatment target containing useful metals; a slag port that discharges molten slag generated by the melt treatment; a furnace floor that guides the molten slag to the slag port; and an accumulation mechanism on the furnace floor, which accumulates the molten slag to precipitate molten metal contained in the molten slag.

If a minute amount of the molten metal contained in the molten slag generated by the melt treatment is accumulated by the accumulation mechanism provided on the furnace floor when the molten slag flows down toward the slag port, the molten metal with greater specific gravity than the molten slag settles in an accumulation area to gradually form a section having high metal concentration in the slag. For example, subsequently the slag is discharged from the slag port together with the molten slag, and in the cooled, solidified, and pulverized slag, a lump having high metal concentration is formed so that it can be easily separated from the slag.

A second feature configuration of the same is, in addition to the first feature configuration described above, that the accumulation mechanism is configured with a recess formed in front of the slag port on the furnace floor which is formed flat, and precipitates the molten metal in the recess.

When the molten slag generated by the melt treatment flows in the recess formed in front of the slag port on the furnace floor, the recess serves as a basin to increase thickness of a molten layer of the molten slag and decrease a flow rate of the melt. Accordingly, a minute amount of the molten metal suspended in the molten slag and having greater specific gravity than the molten slag settles in the recess, while the molten slag with smaller specific gravity flows down toward the slag port. If such a state continues, the molten metal settled in the recess with increased concentration will accumulate in lumps.

A third feature configuration of the same is, in addition to the first feature configuration described above, that the accumulation mechanism is configured with a first weir formed in front of the slag port on the furnace floor which is formed flat, and precipitates the molten metal on an upstream side of the first weir.

The molten slag generated by the melt treatment is blocked by the first weir formed in front of the slag port on the furnace floor, and accumulates on the upstream side of the first weir relative to the slag port. In an accumulation area, a minute amount of the molten metal suspended in the molten slag and having greater specific gravity than the molten slag settles to gradually form a section having high metal concentration in the slag, which is subsequently discharged from the slag port. In the cooled, solidified, and pulverized slag, a lump having high metal concentration is formed so that it can be easily separated by specific gravity separation or magnetic separation, increasing recovery efficiency of the useful metals.

A fourth feature configuration of the same is, in addition to the second feature configuration described above, that the melting furnace includes a rotary surface melting furnace, the rotary surface melting furnace including: an inner cylinder dividing the furnace chamber; an outer cylinder arranged around a periphery of the inner cylinder; a storage part for the treatment target formed between the inner cylinder and the outer cylinder; and the furnace chamber in which the treatment target, which is fed out of the storage part into the furnace chamber by relative rotation of the inner cylinder and the outer cylinder, is melt-treated from a surface of the treatment target, and molten slag flows down to be discharged from the slag port formed at a center of the furnace floor, wherein a recess constituting the accumulation mechanism is formed in an annular shape in plan view around the slag port.

When the treatment target, which is fed out of the storage part into the furnace chamber, accumulates in a mortar shape, and the molten slag generated by the melt treatment on the surface thereof flows down toward the slag port formed at the center of the furnace floor, the molten slag flows in the recess formed in an annular shape in plan view around the slag port. In the recess, a minute amount of the molten metal suspended in the molten slag and having greater specific gravity than the molten slag settles, while the molten slag with smaller specific gravity flows down toward the slag port. If such a state continues, the molten metal settled in the recess will accumulate in lumps.

A fifth feature configuration of the same is, in addition to the fourth feature configuration described above, that a second weir is provided on an outer periphery of the recess, the second weir preventing the un-molten treatment target from flowing into the recess.

If the un-molten treatment target accumulated in a mortar shape inside the furnace chamber flows in the recess, it is difficult to properly accumulate the molten metal in the recess. By providing the second weir on the outer periphery of the recess, it is possible to allow the melt overflowing from the second weir to flow in the recess while damming the un-molten treatment target.

A sixth feature configuration of the same is, in addition to any of the second, fourth, and fifth configurations described above, that a removal mechanism which removes the molten metal settled in the recess is provided.

A cooling mechanism is provided on the furnace floor near the slag port to avoid damage to refractories due to high temperature; thus, if the molten metal settled and accumulated in the recess is solidified by cooling, the function of the recess for settlement and accumulation of the molten metal is impaired after that. Even in such case, the molten metal settled in the recess can be removed by the removal mechanism thus provided so as to maintain the intended function of the recess.

A seventh feature configuration of the same is, in addition to the sixth feature configuration described above, that the removal mechanism is configured with a guide channel that communicates with a bottom of the recess and causes the molten metal to flow out.

By making the guide channel communicate with the bottom of the recess, it is possible to allow the metal settled and accumulated in the recess to flow out in a molten state.

A eighth feature configuration of the same is, in addition to the sixth feature configuration described above, that the removal mechanism is configured with a gas nozzle that communicates with a bottom of the recess and causes the molten metal to overflow from the recess.

By making the gas nozzle communicate with the bottom of the recess and blowing gas, the molten metal settled and accumulated in the recess overflows from the recess and is guided to the slag port. Note that inert gas such as nitrogen is suitably used as the gas.

A ninth feature configuration of the same is, in addition to the second feature configuration described above, that a heating mechanism that remelts metal settled and solidified in the recess is provided.

Even if the molten metal settled and accumulated in the recess is solidified, it is possible to turn it in a molten state again by the heating mechanism to lower viscosity of the molten metal, thereby pushing it to flow toward the slag port due to the flow of the molten slag from the upstream side into the recess. Note that as the heating mechanism, for example, a combustion burner which heats from a space immediately above the recess, a heater disposed near the bottom of the recess, or the like can be configured as appropriate.

A tenth feature configuration of the same is, in addition to the third feature configuration described above, that the melting furnace includes a rotary surface melting furnace, the rotary surface melting furnace including: an inner cylinder dividing the furnace chamber; an outer cylinder arranged around a periphery of the inner cylinder; a storage part for the treatment target formed between the inner cylinder and the outer cylinder; and the furnace chamber in which the treatment target, which is fed out of the storage part into the furnace chamber by relative rotation of the inner cylinder and the outer cylinder, is melt-treated from a surface of the treatment target, and molten slag flows down to be discharged from the slag port formed at a center of the furnace floor, wherein a first weir constituting the accumulation mechanism is disposed around the slag port.

When the treatment target fed out of the storage part into the furnace chamber is accumulated in a mortar shape and the molten slag generated by the melt treatment on the surface thereof flows down toward the slag port formed at the center of the furnace floor, the molten slag is dammed up and accumulated by the first weir disposed around the slag port, and thereafter, circumvents the first weir and flows down to the slag port. In the accumulation area, a minute amount of the molten metal suspended in the molten slag and having greater specific gravity than the molten slag settles to gradually form a section having high metal concentration in the slag, which is subsequently discharged from the slag port. In the cooled, solidified, and pulverized slag, a lump having high metal concentration is formed so that it can be easily separated by specific gravity separation, increasing recovery efficiency of the useful metals.

A eleventh feature configuration of the same is, in addition to the tenth feature configuration described above, that the first weir is formed in an arc shape in plan view and concentrically distributed around the slag port.

By arranging the first weir concentrically distributed around the slag port, it is possible to gain accumulation time in the furnace chamber for the slag which is melted from the surface of the treatment target, and efficiently secure an accumulation opportunity due to settlement for the molten metal suspended in the molten slag during accumulation. The molten slag dammed by the first weir flows along the first weir formed in an arc shape in plan view, and flows out from the edge of the first weir to the slag port.

A twelfth feature configuration of the same is, in addition to the tenth or eleventh feature configuration described above, that a second weir is provided on an outer periphery of the first weir, the second weir preventing the un-molten treatment target from flowing into the accumulation mechanism.

If the un-molten treatment target accumulated in a mortar shape inside the furnace chamber flows into the first weir, it is difficult to secure an accumulation opportunity for the molten metal due to settlement. By providing the second weir on the outer periphery of the first weir, it is possible to guide the molten slag, which overflows from the second weir or flows down from the edge of the second weir, to the first weir while damming the un-molten treatment target by the second weir.

A thirteenth feature configuration of the same is, in addition to the third feature configuration described above, that a removal mechanism that removes the molten metal settled near the upstream side of the first weir is provided.

A cooling mechanism is provided on the furnace floor near the slag port to avoid damage to refractories due to high temperature; thus, if the molten metal settled and accumulated on the upstream side of the first weir is solidified by cooling, the function of the first weir (i.e. accumulation due to settlement of the molten metal) for the molten slag which subsequently flows down is impaired. Even in such case, molten metal settled on the upstream side of the first weir can be removed by the removal mechanism thus provided so as to maintain the intended function of the first weir.

A fourteenth feature configuration of the same is, in addition to the thirteenth feature configuration described above, that the removal mechanism is configured with a guide channel that communicates with a bottom near the upstream side of the first weir and causes the molten metal to flow out.

By making the guide channel communicate with the bottom of the recess, it is possible to allow the metal settled and accumulated on the upstream side of the first weir to flow out in a molten state.

A fifteenth feature configuration of the same is, in addition to the thirteenth feature configuration described above, that the removal mechanism is configured with a gas nozzle that communicates with a bottom near the upstream side of the first weir and causes the molten metal to overflow from the first weir.

By making the gas nozzle communicate with the bottom near the upstream side of the first weir and blowing gas, the molten metal settled and accumulated near the upstream side of the first weir flows along the first weir and is guided to the slag port. Note that inert gas such as nitrogen is suitably used as the gas.

A sixteenth feature configuration of the same is, in addition to the third feature configuration described above, that a heating mechanism that remelts metal settled and solidified near the upstream side of the first weir is provided.

Even if the molten metal settled and accumulated on the upstream side of the first weir is solidified, it is possible to turn it in a molten state again by the heating mechanism to lower viscosity of the molten metal, thereby pushing it to flow toward the slag port due to the flow of the molten slag from the upstream side into the first weir. Note that as the heating mechanism, for example, a combustion burner which heats from the above space on the upstream side of the first weir, a heater disposed near the bottom on the upstream side of the first weir, or the like can be configured as appropriate.

### Advantageous Effects of Invention

As described above, the present invention can provide a melting furnace that enables efficient recovery of reusable useful metals from a treatment target containing metals.

### Brief Description of Drawings

Fig. 1 is an illustrative diagram of a rotary surface melting furnace as one example of a melting furnace to which the present invention is applied.
Fig. 2A is a cross sectional view of main parts of a melting furnace in plan view, and Figs. 2B-2D are diagrams respectively showing a cross section of a treatment target fed into the melting furnace, illustrating relation between a furnace floor and a molten surface.
Figs. 3A and 3B are illustrative diagrams of arrangement of a recess which is an accumulation mechanism formed on a furnace floor.
Fig. 4A is an illustrative enlarged diagram of main parts near a slag port of a melting furnace, and Figs. 4B-4D are illustrative diagrams of a removal mechanism provided in a recess.
Fig. 5A is a diagram showing another embodiment, illustrating arrangement of a weir which is an accumulation mechanism formed on a furnace floor, and Fig. 5B is a diagram showing a cross section of a treatment target fed into a melting furnace, illustrating relation between a furnace floor, a molten surface, and a weir.
Fig. 6A is a diagram showing another embodiment, illustrating arrangement of a weir which is an accumulation mechanism formed on a furnace floor, and Fig. 6B is a diagram showing a cross section of a treatment target fed into a melting furnace, illustrating relation between a furnace floor, a molten surface, and a weir.
Figs 7A-7C are illustrative diagrams of a removal mechanism provided on an upstream side of a weir.
Figs. 8A and 8B are illustrative diagrams of the other embodiments of a surface melting furnace.

### Best Mode for Carrying out the Invention

Hereinafter, embodiments of a melting furnace according to the present invention will be described.

### [Configuration of Surface Melting Furnace]

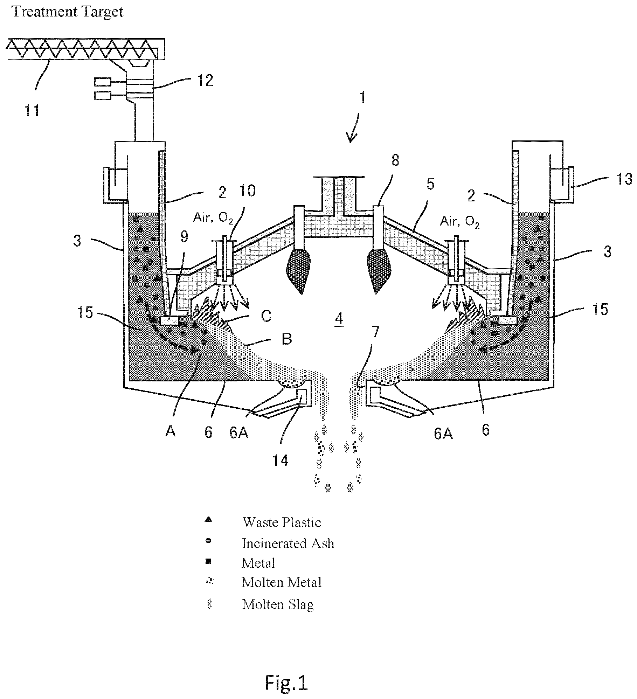

Fig. 1 shows a rotary surface melting furnace 1 as one example of a surface melting furnace. The surface melting furnace 1 is a furnace for melt-treating miscellaneous waste, and a treatment target thereof includes: organic sludge such as sewage sludge, livestock excreta, or methane fermentation residues from food waste; a combustible material such as plastic, paper, SRF (Solid Recovered Fuel), or recycling residues containing plastic and metal; an incombustible material such as incinerated ash, contaminated soil, waste glass, waste pottery, or asbestos; or the like. The metal includes useful metals such as iron, nickel, copper, silver, and gold, as well as heavy metals and the like. Although described below is a case in which the treatment target is a mixture of recycling residues containing plastic and metal and incinerated ash, other wastes may also be included.

The rotary surface melting furnace 1 has an inner cylinder 2 and an outer cylinder 3 which are concentrically arranged, and a storage part 15 for a treatment target is formed between the inner cylinder 2 and the outer cylinder 3. A furnace ceiling 5 is provided inside the inner cylinder 2, and a furnace floor 6 is formed extending in a central direction from a lower part of the outer cylinder 3. A slag port 7 is formed at the center of the furnace floor 6, and a water-cooled cooling mechanism 14 is disposed around the slag port 7. A furnace chamber 4 is formed in a space surrounded by the inner cylinder 2, the furnace ceiling 5, and the furnace floor 6, and the respective inner walls are covered with refractories. The inner cylinder 2 and the outer cylinder 3 are configured to be airtight with a water-sealing mechanism 13.

A screw-type conveyor mechanism 11 is provided to convey the treatment target to the storage part 15, and the treatment target is dropped and supplied into the storage part 15 via a double damper mechanism 12 to prevent outside air from flowing into the furnace chamber 4.

Rotation of the outer cylinder 3 relative to the inner cylinder 2 causes a feeding blade 9 provided on a lower part of the inner cylinder 2 to feed the treatment target stored in the storage part 15 into the furnace chamber 4, such that the treatment target is distributed in a mortar shape toward the slag port 7. The inside of the furnace is heated to a high temperature of about 1300°C by two combustion burners 8 provided at a central side of the furnace ceiling 5, such that the treatment target is melted from the surface thereof and flows down from an upstream side to the slag port 7 on a downstream side. Additionally, a plurality of nozzles 10 which supplies air for combustion is provided radially outside on the furnace ceiling 5.

Combustible components, such as waste plastic, of the treatment target fed into the furnace chamber 4 are first vaporized on the upstream side and burned by gas with the air for combustion or oxygen gas supplied from the nozzles 10. On this occasion, the upstream side has a weakly reducing atmosphere, and heavy metals contained in the treatment target are reduced and volatilized, and flow down together with exhaust gas to a secondary combustion chamber. The treatment target heated by radiant heat from the combustion burners 8 and the furnace ceiling 5 is melted from the surface thereof and flows down toward the slag port 7. On this occasion, thickness of a molten layer is several tens of millimeters. The sign A shown in Fig. 1 indicates an un-molten treatment target, the sign B indicates the molten layer, and the sign C indicates a gasified and burned section.

Fig. 1 illustrates diagrams indicating waste plastic, incinerated ash, and metal contained in the treatment target, as well as molten slag and molten metal. The useful metals contained in the treatment target, which are subjected to melt treatment in the furnace chamber 4 under a weakly reducing atmosphere, flow down toward the slag port 7 as alloyed molten metal suspended in the molten slag without being oxidized.

A transport mechanism having a water tank for cooling the molten slag is arranged below the slag port 7, and the molten slag is discharged outside the furnace as granulated slag. In addition, combustion gas generated in the furnace chamber 4 is burned in the secondary combustion chamber provided on a downstream side of the slag port 7, purified in exhaust gas treatment equipment, and then discharged from a chimney to the air. The furnace chamber 4 is maintained at a negative pressure by an induced draft fan arranged on an upstream side of the chimney.

### [Configuration of Accumulation Mechanism]

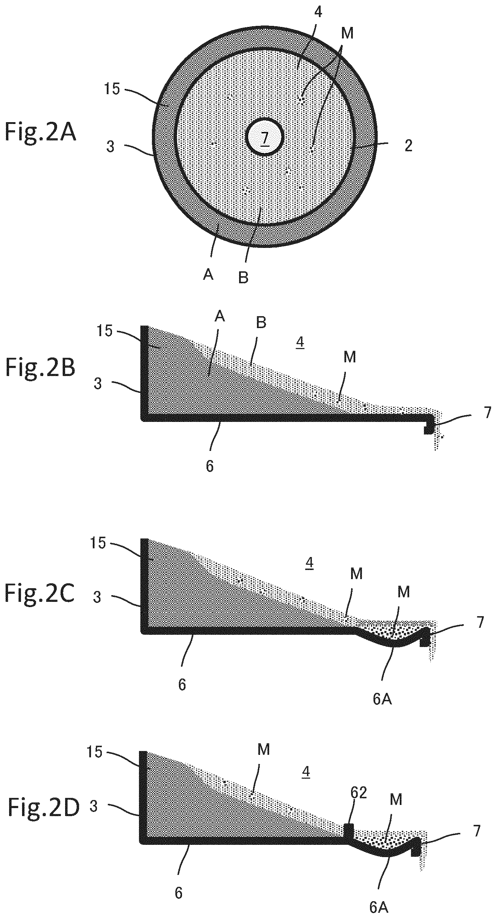

Fig. 2A shows a plane cross section of main parts of the surface melting furnace 1. The treatment target A, which is fed out of the storage part 15 formed between the outer cylinder 3 and the inner cylinder 2 into the furnace chamber 4, accumulates in a mortar shape. On the surface thereof, the molten layer B is formed and the molten slag flows down toward the slag port 7. In the molten slag, a minute amount of molten metal M, which is obtained by melting the useful metals contained in the treatment target A, is dispersed in a suspended state.

As shown in Fig. 2B, in a case that the entire area of the furnace floor 6 is formed flat, the molten slag as well as a minute amount of the molten metal M suspended therein drip down from the slag port 7. Thus, the molten metal M having a small particle size is dispersed and contained in the slag which is solidified as granulated slag, and it is very difficult to efficiently recover the useful metals even by crushing the slug and performing specific gravity separation.

Therefore, an accumulation mechanism to accumulate the molten slag is formed on the furnace floor 6. When the molten slag generated by melt treatment is accumulated by the accumulation mechanism provided on the furnace floor 6 upon flowing down toward the slag port 7, a minute amount of the molten metal with greater specific gravity than the molten slag settles in an accumulation area to gradually form a section having high metal concentration in the slag. Then, the molten slag with smaller specific gravity eventually flows down toward the slag port 7. In this manner, when the section having the high metal concentration is formed in the slag, for example, it is possible to easily separate, by specific gravity separation or magnetic separation, a lump having high metal concentration from the slag that is subsequently cooled, solidified, and crushed, thereby increasing recovery efficiency of the useful metals.

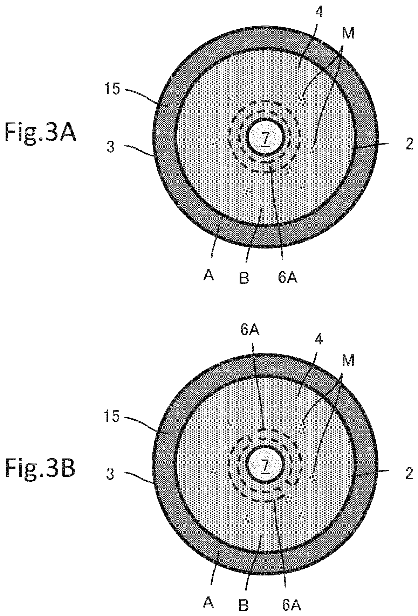

Figs. 2C and 3A show examples in which the accumulation mechanism is configured with a recess 6A formed in front of the slag port 7 on the furnace floor 6 which is formed flat. When the molten slag generated by the melt treatment flows in the recess 6A, the recess 6A serves as a basin to increase thickness of the molten layer of the molten slag and decrease a flow rate of the melt. Accordingly, a minute amount of the molten metal suspended in the molten slag and having greater specific gravity than the molten slag settles in the recess, while the molten slag with smaller specific gravity flows down toward the slag port 7. If such a state continues, the concentration of the molten metal settled in the recess 6A will rise and the molten metal will accumulate in lumps. If a large cohesive force is applied, accumulation of a metal lump having a large particle size may occur.

As shown in Fig. 3A, the recess 6A is formed in an annular shape in plan view around the slag port 7 such that the molten slag passes through the recess 6A before reaching the slag port 7 and the molten metal is accumulated. Note that the recess 6A may not be continuously formed in an annular shape around the slag port 7, but a plurality of recesses 6A may be arranged around the slag port 7 to form an annular shape in plan view as shown in Fig. 3B. Although Fig. 3B shows an example configured with two recesses 6A, there may be three or more recesses 6A.

As shown in Fig. 2D, it is preferable to provide a weir 62 on an outer periphery of the recess 6A to prevent the un-molten treatment target A from flowing in the recess 6A. If the un-molten treatment target A accumulated in a mortar shape inside the furnace chamber 4 flows in the recess 6A, it is difficult to accumulate the molten metal in the recess 6A. By providing the weir 62 on the outer periphery of the recess 6A, it is possible to allow the melt overflowing from the weir 62 to flow in the recess 6A while damming the un-molten treatment target A. The weir 62 corresponds to a second weir of the present invention.

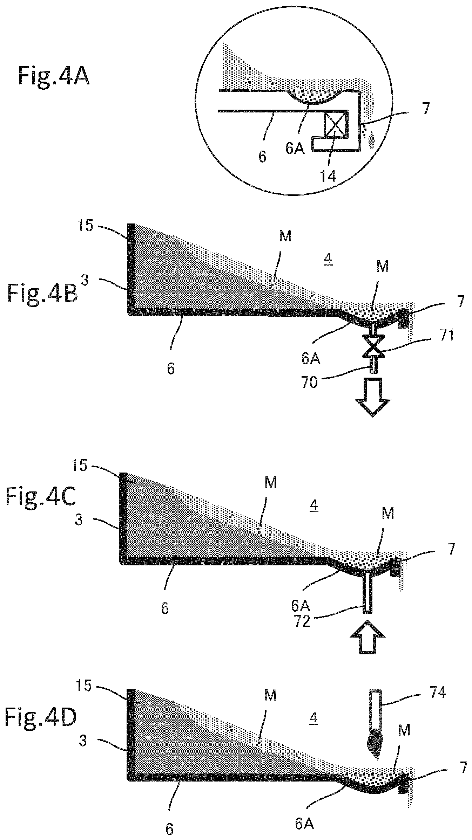

As shown in Fig. 4A, the cooling mechanism 14 is provided on the furnace floor near the slag port 7 to avoid damage to the refractories due to high temperature; thus, if the molten metal settled in the recess 6A is solidified by cooling, there is a risk that the functions of the recess 6A for increasing concentration as well as accumulation due to settlement of the molten metal is impaired. Therefore, a removal mechanism is preferably provided to remove the molten metal settled in the recess 6A.

Fig. 4B shows a guide channel 70 as one example of the removal mechanism. The guide channel 70 is configured to communicate with a bottom of the recess 6A and cause the molten metal to flow out from the recess 6A. A valve 71 is provided in the guide channel 70, and adjustment is performed to open the valve 71 to remove the molten metal when a predetermined amount of the molten metal is accumulated in the recess 6A, and thereafter close the valve 71.

Fig. 4C shows a gas nozzle 72 as one example of the removal mechanism. The gas nozzle 72 is configured to communicate with the bottom of the recess 6A, and blow gas into the recess 6A before the settled metal is solidified. By blowing the gas, the molten metal retained, settled, and accumulated in the recess 6A overflows from the recess 6A and is guided to the slag port 7. Inert gas such as nitrogen gas and argon gas is suitably used as the gas. Note that a shutter mechanism is preferably provided to open the gas nozzle 72 when blowing the gas, and close the gas nozzle 72 when stopping the gas.

Fig. 4D shows a heating mechanism 74 as one example of the removal mechanism. A combustion burner can be used as the heating mechanism 74, which heats the metal M settled and solidified in the recess 6A from a space immediately above the recess 6A. Such heating burner can be attached to the furnace ceiling 5 so as to be movable up and down, where it regularly descends immediately above the recess 6A and remelts the metal M solidified in the recess 6A to lower viscosity of the molten metal, thereby pushing the molten metal to flow toward the slag port 7 by the flow of the molten slag from the upstream side into the recess 6A.

Other than the combustion burner, it is possible to dispose a heater in the vicinity of the bottom of the recess 6A as the heating mechanism.

The recess 6A is preferably formed with an arcuate cross section, and the thickness thereof is preferably in the range of 100-200 mm. Additionally, width of the recess 6A is in the range of 10% to 20% of a radius of the furnace floor 6, and preferably in the range of 200-500 mm.

Although multiple examples of the removal mechanism are described above, it is also possible to employ more than one of the removal mechanisms. For example, by combining the heating mechanism 74 and the gas nozzle 72, once the metal settled in the recess 6A is solidified, gas may be injected from the gas nozzle 72 after remelting the metal by the heating mechanism 74. Additionally, by combining the heating mechanism 74 and the guide channel 70, once the metal settled in the recess 6Ais solidified, the metal may be remelted by the heating mechanism 74 and then, the molten metal may be removed via the guide channel 70.

By activating any of the removal mechanisms described above at an appropriate time during furnace operation or activating immediately before the furnace is stopped, the metal M settled in the recess 6A can be removed as appropriate. Additionally, it may be configured that an operator scrapes off the metal settled in the recess 6A after the furnace is stopped.

### [Other Configurations of Accumulation Mechanism]

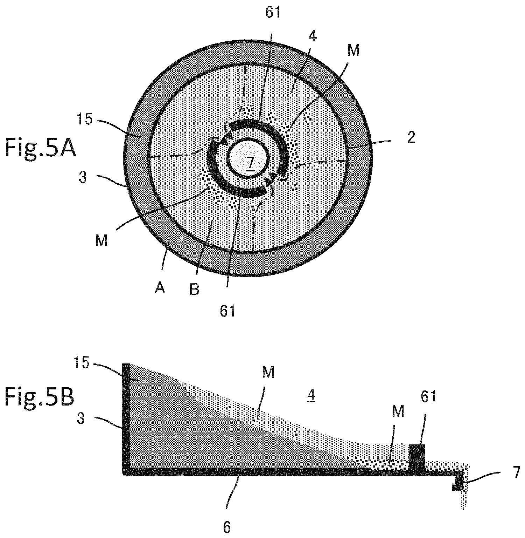

Figs. 5A-B show another embodiment of the accumulation mechanism.

A pair of first weirs 61 formed in an arc shape in plan view is disposed in front of the slag port 7 on the flat furnace floor 6, and distributed concentrically to surround the slag port 7.

When the treatment target fed out of the storage part into the furnace chamber 4 is accumulated in a mortar shape and the molten slag generated by melt treatment on the surface thereof flows down toward the slag port 7 formed at the center of the furnace floor 6, the molten slag is dammed up and accumulated by the first weirs 61 disposed around the slag port 7, and thereafter, circumvents the first weirs 61 and flows down to the slag port 7. In the accumulation area, a minute amount of the molten metal suspended in the molten slag and having greater specific gravity than the molten slag settles to gradually form a section having high metal concentration in the slag. Thereafter, the section having high metal concentration is discharged from the slag port 7 together with the molten slag.

By arranging the first weirs 61 concentrically distributed around the slag port 7, it is possible to gain accumulation time in the furnace chamber 4 for the slag which is melted from the surface of the treatment target, and by precipitating the molten metal suspended in the molten slag during accumulation, it is possible to secure an opportunity to efficiently increase concentration of metal components and accumulate them. The molten slag dammed by the first weirs 61 flows in a circumferential direction along the arcuate surface of the first weirs 61, and flows out from the edge of the first weirs 61 to the slag port 7. The dash-dot line shown in Fig. 5A shows the flow of the molten slag.

Although in this example, a pair of arcuate weirs 61 is disposed concentrically with the center of the slag port 7 in plan view, the number of the arcuate weirs 61 may be three or more. Additionally, the multi-stage arcuate weirs 61 may be installed in a radial direction concentrically with the center of the slag port 7 in plan view. In this case, by arranging to cover a gap between the weirs 61 disposed radially inside by the weirs 61 disposed radially outside, it is possible to avoid such a case that the molten slag flows down in a straight pass toward the slag port 7. Additionally, the arc shape is not limited to an arc, and for example, the concept includes a "C" shape of the alphabet and the like, and further includes a shape in which a plurality of rectangular weirs in plan view are connected on a concentric circle to form a substantially arc shape as a whole.

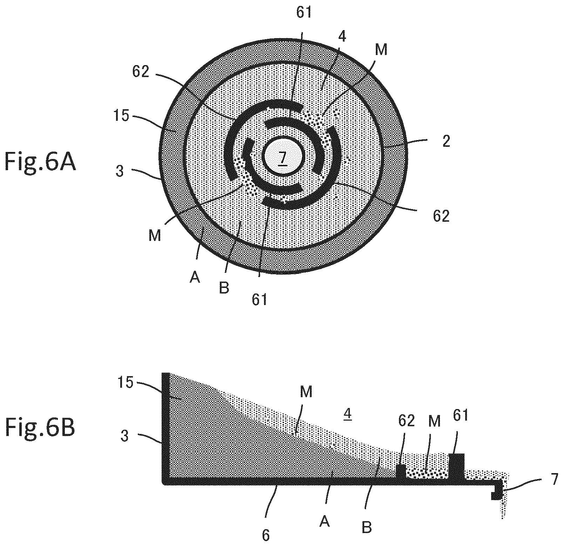

As shown in Figs. 6A-B, second weirs 62 are preferably provided on an outer periphery of the first weirs 61 to prevent the un-molten treatment target from flowing into the accumulation mechanism (first weirs 61).

If the un-molten treatment target A accumulated in a mortar shape inside the furnace chamber 4 flows into the first weirs 61, it is difficult to secure a good accumulation opportunity for the molten metal M. By providing the second weirs 62 on the outer periphery of the first weirs 61, it is possible to accumulate, by the first weirs 61, only the molten slag which overflows from the second weirs 62 or flows down from the edges of the second weirs 62, while damming the un-molten treatment target A by the second weirs 62.

Note that the first weirs 61 may be configured as the single annular weir 61 surrounding the slag port 7 to precipitate and accumulate the molten metal on the upstream side of the weir 61, and cause the molten slag to overflow from the weir 61 and flow down to the slag port 7. In this case, the annular weir 61 may be configured to have constant height in the circumferential direction or partially different height. The molten slag can overflow from the section having partially low height. Note that aspects of such height of the weir 61 is applicable to the arcuate weirs 61 described above.

In either embodiment, as described in Figs. 4A-D, the removal mechanism is preferably provided to remove the molten metal settled near the upstream side of the first weir 61. This is because, in a case that a plurality of weirs 61 is distributed concentrically with the slag port 7, the molten slag as well as the molten metal flow from the edge of each weir 61 to the slag port 7, but the molten metal settled on the furnace floor 6 side may solidify due to influence of the cooling mechanism 14.

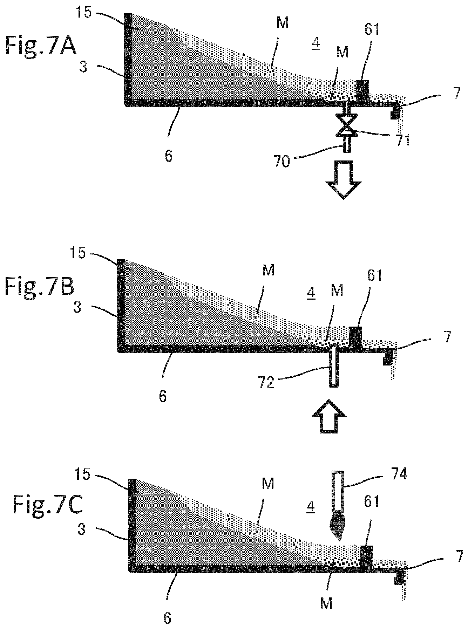

As shown in Fig. 7A, the guide channel 70 can also be configured as the removal mechanism, which communicates with the bottom near the upstream side of the first weir 61 and causes the molten metal to flow out.

As shown in Fig. 7B, the gas nozzle 72 can also be configured as the removal mechanism, which communicates with the bottom near the upstream side of the first weir 61 and causes the molten metal to flow out from an upstream area of the first weir 61 to the slag port 7. By making the gas nozzle 72 communicate with the bottom near the upstream side of the first weir 61 and blowing gas, the molten metal settled and accumulated near the upstream side of the first weir 61 flows along the first weir and is guided to the slag port. Note that inert gas such as nitrogen is suitably used as the gas.

As shown in Fig. 7C, it is preferable to provide the heating mechanism that remelts the metal settled and solidified near the upstream side of the first weir 61.

Even if the molten metal settled and accumulated on the upstream side of the first weir is solidified, it is possible to turn it in a molten state again by the heating mechanism to lower viscosity of the molten metal, thereby pushing the molten metal to flow toward the slag port due to the flow of the molten slag from the upstream side into the first weir. As the heating mechanism 74, for example, a combustion burner which heats from the above space on the upstream side of the first weir 61, a heater disposed near the bottom on the upstream side of the first weir 61, or the like can be configured as appropriate.

In the above description, described is an example where the accumulation mechanism to accumulate the molten metal suspended in the molten slag is provided on the rotary surface melting furnace. However, the melting furnace to which the present invention is applied may be other than the rotary surface melting furnace.

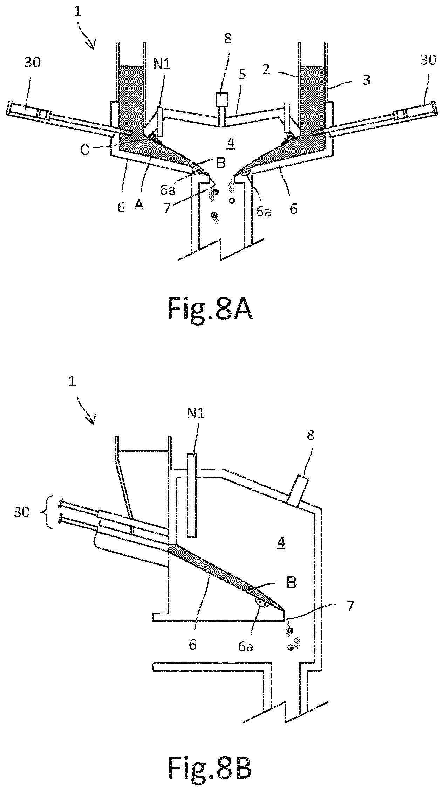

For example, as shown in Fig. 8A, it is also possible to provide the accumulation mechanism (the recess 6a or weir) on the furnace floor 6 of the surface melting furnace 1, wherein the slag port 7 is formed at the center of the furnace floor 6 and a plurality of push-in supply mechanisms 30 to supply the treatment target is disposed around the furnace floor 6. The surface melting furnace 1 is a type of a surface melting furnace in which both the outer cylinder 3 configured integrally with the furnace floor 6 and the inner cylinder 2 configured integrally with the furnace ceiling 5 are secured, and the push-in supply mechanisms 30 supply the treatment target into the furnace chamber.

Furthermore, as shown in Fig. 8B, it is also possible to provide the accumulation mechanism (the recess 6a or weir) on the furnace floor 6 of the surface melting furnace 1, wherein the slag port 7 is formed at the end of the furnace floor 6, and a plurality of push-in supply mechanisms 30 to supply the treatment target is disposed on the opposite side. In any of the surface melting furnace 1, tips of multi-stage nozzles are disposed so as to be positioned near the molten surface from an upstream side toward a downstream side of the treatment target pushed in the furnace chamber 4. In either case, the shape of the accumulation mechanism (the recess 6a or weir) can be set as appropriate based on the shape of the furnace floor 6 and the downward flow direction of the molten slag.

The metal-containing slag, which drips down from the slag port 7 and thus obtained, is crushed into fine particles by a crusher, and then separated into metal and slag by a specific gravity separator.

The embodiments described above are only one example of the present invention. A specific configuration of each component can be modified and designed as appropriate to the extent that the operations and effects of the present invention can be obtained.

### Reference Signs List

- 1: Surface melting furnace
- 2: Inner cylinder
- 3: Outer cylinder
- 4: Furnace chamber
- 5: Furnace ceiling
- 6: Furnace floor
- 6A: Recess (accumulation mechanism)
- 7: Slag port
- 8: Combustion burner
- 9: Feeding blade
- 15: Storage part
- 61: First weir (accumulation mechanism)
- 62: Second weir
- 70: Guide channel
- 71: Valve
- 72: Gas nozzle
- 74: Heating mechanism
- A: Un-molten treatment target
- B: Molten layer on surface of treatment target
- C: Gasified and burned section
- M: Molten metal

## Claims

1. A melting furnace comprising: a furnace chamber that performs melt treatment of a treatment target containing useful metals; a slag port that discharges molten slag generated by the melt treatment; and a furnace floor that guides the molten slag to the slag port,
wherein an accumulation mechanism is provided on the furnace floor to accumulate the molten slag and precipitate molten metal contained in the molten slag.

2. The melting furnace according to claim 1, wherein the accumulation mechanism is configured with a recess formed in front of the slag port on the furnace floor which is formed flat, and precipitates the molten metal in the recess.

3. The melting furnace according to claim 1, wherein the accumulation mechanism is configured with a first weir formed in front of the slag port on the furnace floor which is formed flat, and precipitates the molten metal on an upstream side of the first weir.

4. The melting furnace according to claim 2, comprising a rotary surface melting furnace, the rotary surface melting furnace comprising:
an inner cylinder dividing the furnace chamber;
an outer cylinder arranged around a periphery of the inner cylinder;
a storage part for the treatment target formed between the inner cylinder and the outer cylinder; and
the furnace chamber in which the treatment target, which is fed out of the storage part into the furnace chamber by relative rotation of the inner cylinder and the outer cylinder, is melt-treated from a surface of the treatment target, and molten slag flows down to be discharged from the slag port formed at a center of the furnace floor,
wherein a recess constituting the accumulation mechanism is formed in an annular shape in plan view around the slag port.

5. The melting furnace according to claim 4, wherein a second weir is provided on an outer periphery of the recess, the second weir preventing the un-molten treatment target from flowing into the recess.

6. The melting furnace according to any one of claims 2, 4, and 5, comprising a removal mechanism which removes the molten metal settled in the recess.

7. The melting furnace according to claim 6, wherein the removal mechanism is configured with a guide channel that communicates with a bottom of the recess and causes the molten metal to flow out.

8. The melting furnace according to claim 6, wherein the removal mechanism is configured with a gas nozzle that communicates with a bottom of the recess and causes the molten metal to overflow from the recess.

9. The melting furnace according to claim 2, wherein a heating mechanism that remelts metal settled and solidified in the recess is provided.

10. The melting furnace according to claim 3, comprising a rotary surface melting furnace, the rotary surface melting furnace comprising:
an inner cylinder dividing the furnace chamber;
an outer cylinder arranged around a periphery of the inner cylinder;
a storage part for the treatment target formed between the inner cylinder and the outer cylinder; and
the furnace chamber in which the treatment target, which is fed out of the storage part into the furnace chamber by relative rotation of the inner cylinder and the outer cylinder, is melt-treated from a surface of the treatment target, and molten slag flows down to be discharged from the slag port formed at a center of the furnace floor,
wherein a first weir constituting the accumulation mechanism is disposed around the slag port.

11. The melting furnace according to claim 10, wherein the first weir is formed in an arc shape in plan view and concentrically distributed around the slag port.

12. The melting furnace according to claim 10 or 11, wherein a second weir is provided on an outer periphery of the first weir, the second weir preventing the un-molten treatment target from flowing into the accumulation mechanism.

13. The melting furnace according to claim 3, wherein a removal mechanism that removes the molten metal settled near the upstream side of the first weir is provided.

14. The melting furnace according to claim 13, wherein the removal mechanism is configured with a guide channel that communicates with a bottom near the upstream side of the first weir and causes the molten metal to flow out.

15. The melting furnace according to claim 13, wherein the removal mechanism is configured with a gas nozzle that communicates with a bottom near the upstream side of the first weir and causes the molten metal to overflow from the first weir.

16. The melting furnace according to claim 3, wherein a heating mechanism that remelts metal settled and solidified near the upstream side of the first weir is provided.
